# EUROPEAN PATENT SPECIFICATION

(11) **EP 3 779 138 B1**
(45) Date of publication and mention of the grant of the patent: **15.02.2023**
(21) Application number: 19777111.6
(22) Date of filing: 15.02.2019
(51) Int. Cl.: F01N 13/00, F01N 3/00, F02D 35/00, F01N 3/28, F01N 3/10, F01N 1/00, F01N 1/08

(54) **EXHAUST DEVICE FOR INTERNAL COMBUSTION ENGINE**
ABGASVORRICHTUNG FÜR VERBRENNUNGSMOTOR
DISPOSITIF D'ÉCHAPPEMENT POUR MOTEUR À COMBUSTION INTERNE

(30) Priority: 29.03.2018 JP 2018065742
(43) Date of publication of application: 17.02.2021
(73) Proprietor: HONDA MOTOR CO., LTD., Minato-ku Tokyo 107-8556 (JP)
(72) Inventor: NAKAMURA, Masashi, Wako-shi, Saitama 351-0193 (JP); SHIMIZU, Takahiko, Wako-shi, Saitama 351-0193 (JP)
(74) Representative: Dehns
(86) International application number: PCT/JP2019/005677
(87) International publication number: WO 2019/187757

(56) References cited:
- EP-A1- 3 061 932
- EP-A1- 3 064 722
- DE-A1-102017 004 376
- JP-A- S5 638 515
- JP-A- 2006 112 239
- JP-A- 2008 063 977
- JP-A- 2017 150 307
- JP-A- 2017 150 307

## Description

### [Technical Field]

The present invention relates to an exhaust device for an internal combustion engine with a catalyst and a silencer disposed in an exhaust pipe.

### [Background Art]

There have been proposed a variety of exhaust devices where a catalyst for purifying exhaust gases and a silencer are disposed in an exhaust pipe and an exhaust gas sensor is disposed downstream of the catalyst for detecting the oxygen concentration in the exhaust gases downstream of the catalyst (see, for example, Patent Document 1).

Each of EP 3064722 A1, DE 102017004376 A1, JP 2017150307 A and EP 3061932 A1 disclose examples of exhaust devices comprising a silencer and catalyst for an engine.

### [Prior Art Document]

### [Patent Document]

Patent Document 1: JP 2016-183657 A

In the exhaust device disclosed in Patent Document 1, the silencer includes a casing having an expanding-in-diameter portion whose diameter increases gradually from a joint where the casing is joined to the exhaust pipe and a tubular portion extending from the expanding-in-diameter portion, and the catalyst is installed in the joint where the casing is joined to the exhaust pipe.

The exhaust gas sensor for detecting the oxygen concentration downstream of the catalyst is mounted on the exhaust pipe in the casing extending from the catalyst. The expanding-in-diameter portion of the casing has a recess that is recessed toward the exhaust pipe, and the exhaust gas sensor is attached to the bottom of the recess that is held against the exhaust pipe and also to the exhaust pipe.

### [Summary of the Invention]

### [Underlying Problem to be solved by the Invention]

According to Patent Document 1, as described above, the exhaust gas sensor is placed in the recess defined in the casing of the silencer. Depending on the position of the catalyst and the shape of the casing of the silencer, a large recess needs to be defined in the casing, making it difficult to form parts of the silencer.

In addition, the volume of an expansion chamber in the silencer is reduced by the volume of the recess.

The present invention has been made in view of the above problems. It is an object of the present invention to provide an exhaust device for an internal combustion engine which allows an exhaust gas sensor to be installed easily downstream of a catalyst in an exhaust pipe without machining a casing of a silencer.

According to a first aspect of the invention, there is provided an exhaust device for an internal combustion engine mounted on a vehicle, in which a catalyst and a silencer are disposed in an exhaust pipe configured to extend from the internal combustion engine, comprising: an upstream exhaust gas sensor disposed upstream of the catalyst; and a downstream exhaust gas sensor disposed downstream of the catalyst, wherein: the silencer is a muffler that is divided into a first muffler case and a second muffler case; the second muffler case has a first expansion chamber and the first muffler case is internally divided by a separator into a second expansion chamber and a third expansion chamber; the catalyst is disposed in the first muffler case and extends through the separator;
the downstream exhaust gas sensor is mounted on a midstream joint exhaust pipe that extends from the catalyst, out of the first muffler case and into the first expansion chamber in the second muffler case.

With the above exhaust device for the internal combustion engine, since the downstream exhaust gas sensor disposed on the exhaust pipe downstream of the catalyst is mounted on the portion of the exhaust pipe that extends outwardly from the expansion chamber in the silencer, an expansion chamber case does not need to be machined to form a recess therein, and the downstream exhaust gas sensor can simply be mounted on the exhaust pipe that is exposed outwardly.

Furthermore, it is not necessary to reduce the volume of the expansion chamber in the silencer.

With the above exhaust device for the internal combustion engine, since the catalyst is disposed in the expansion chamber, the catalyst can be activated early by the heat of the exhaust gases in the expansion chamber, and can be kept warm by the heat in the expansion chamber and hence be kept active.

With the above exhaust device for the internal combustion engine, using an outwardly exposed portion of the joint exhaust pipe interconnecting the expansion chambers that are separate from each other, the downstream exhaust gas sensor is neatly disposed between the expansion chambers and mounted on the joint exhaust pipe.

As the downstream exhaust gas sensor is disposed between the expansion chambers, the downstream exhaust gas sensor is protected by the expansion chambers.

Preferably, a vehicle is provided, comprising: an internal combustion engine mounted on the vehicle; and an exhaust device of the first aspect.

The exhaust device for the internal combustion engine may include:
another joint exhaust pipe than the midstream joint exhaust pipe, interconnecting the second and third expansion chambers and the first expansion chamber that are separate from each other,
in which the downstream exhaust gas sensor may have at least a portion overlapping the other joint exhaust pipe as viewed in side elevation of the vehicle and located inwardly of the other joint exhaust pipe with respect to the vehicle.

With the above exhaust device for the internal combustion engine, since at least a portion of the downstream exhaust gas sensor overlaps an inside in a vehicular widthwise direction of the other joint exhaust pipe as viewed in side elevation, the downstream exhaust gas sensor is protected by the other joint exhaust pipe from external forces applied sideways.

In the exhaust device for the internal combustion engine, the downstream exhaust gas sensor may be mounted on the midstream joint exhaust pipe and inclined obliquely inwardly in a vehicular widthwise direction.

With the above exhaust device for the internal combustion engine, the downstream exhaust gas sensor is inclined inwardly in a vehicular widthwise direction and mounted on the exhaust pipe. Consequently, the downstream exhaust gas sensor can avoid being hit head-on by external forces from outside in the vehicular widthwise direction.

In the exhaust device for the internal combustion engine, the downstream exhaust gas sensor may be disposed inside in a vehicular widthwise direction of a muffler cover that covers an outside in the vehicular widthwise direction of the silencer.

With the above exhaust device for the internal combustion engine, the downstream exhaust gas sensor is disposed inwardly in the vehicular widthwise direction of the muffler cover that covers an outer side in the vehicular widthwise direction of the silencer. Therefore, the downstream exhaust gas sensor is protected by the muffler cover.

In the exhaust device for the internal combustion engine, the downstream exhaust gas sensor may have an upper side covered with the muffler cover.

With the above exhaust device for the internal combustion engine, since the upper side of the downstream exhaust gas sensor is covered with the muffler cover, the downstream exhaust gas sensor is protected from external forces from an upper side.

According to a second aspect of the invention there is provided an exhaust device for an internal combustion engine mounted on a vehicle, in which a catalyst and a silencer are disposed in an exhaust pipe configured to extend from the internal combustion engine, comprising: an upstream exhaust gas sensor disposed upstream of the catalyst; and a downstream exhaust gas sensor disposed downstream of the catalyst, wherein: the silencer is a muffler that is divided into a first muffler case and a second muffler case; the first muffler case has a first expansion chamber and the second muffler case is internally divided by a separator into a second expansion chamber and a third expansion chamber; the catalyst is disposed in the first muffler case; the downstream exhaust gas sensor is mounted on a midstream joint exhaust pipe that extends from the catalyst, out of the first muffler case and into the first expansion chamber in the first muffler case.

With the above exhaust device for the internal combustion engine, since the joint exhaust pipe extending outwardly from the expansion chamber is connected to the expansion chamber, the downstream exhaust gas sensor can easily be mounted on the joint exhaust pipe extending outwardly from the expansion chamber.

With the above exhaust device for the internal combustion engine, since the catalyst is disposed in the expansion chamber, the catalyst can be activated early by the heat of the exhaust gases in the expansion chamber, and can be kept warm by the heat in the expansion chamber and hence be kept active.

In the exhaust device for the internal combustion engine, the downstream exhaust gas sensor may be disposed in the vicinity of an upstream joint of the midstream joint exhaust pipe, which extends outwardly from the first expansion chamber, that is joined to the first expansion chamber.

With the above exhaust device for the internal combustion engine, as the downstream exhaust gas sensor is disposed in the vicinity of an upstream joint of the midstream joint exhaust pipe, which extends outwardly from the first expansion chamber, that is joined to the first expansion chamber, the downstream exhaust gas sensor can be disposed as closely to the catalyst as possible and can accurately detect a change caused in the oxygen concentration in the exhaust gases by the catalyst.

In the exhaust device for the internal combustion engine, the first expansion chamber may have a recess that is recessed near to a downstream end of the catalyst,
the midstream joint exhaust pipe may extend from the first expansion chamber into the recess, and
the downstream exhaust gas sensor may have a portion mounted on the midstream joint exhaust pipe and positioned in the recess.

With the above exhaust device for the internal combustion engine, inasmuch as the portion of the downstream exhaust gas sensor that is mounted on the midstream joint exhaust pipe is positioned in the recess that is recessed near to the downstream end of the catalyst in the first expansion chamber, the downstream exhaust gas sensor can be disposed as closely to the catalyst as possible and can accurately detect a change caused in the oxygen concentration in the exhaust gases by the catalyst.

Preferably, a vehicle is provided, comprising: an internal combustion engine mounted on the vehicle; and an exhaust device according to the second aspect.

In the exhaust device for the internal combustion engine, the first expansion chamber may be disposed below the internal combustion engine,
the exhaust device may further include a second expansion chamber connected to the first expansion chamber by a downstream joint exhaust pipe, and
the downstream exhaust gas sensor may be disposed inwardly in a vehicular widthwise direction of the second expansion chamber or the downstream joint exhaust pipe.

With the above exhaust device for the internal combustion engine, the first expansion chamber is disposed below the internal combustion engine, and the downstream exhaust gas sensor is disposed inwardly in the vehicular widthwise direction of the downstream joint exhaust pipe connecting the first expansion chamber to the second expansion chamber or the other expansion chamber. Therefore, the downstream exhaust gas sensor is protected by the downstream joint exhaust pipe or the second expansion chamber.

### [Effects of the Invention]

According to the present invention, since the downstream exhaust gas sensor disposed on the exhaust pipe downstream of the catalyst is mounted on the portion of the exhaust pipe that extends outwardly from the expansion chamber in the silencer, an expansion chamber case does not need to be machined to form a recess therein, and the downstream exhaust gas sensor can simply be mounted on the exhaust pipe that is exposed outwardly.

Furthermore, it is not necessary to reduce the volume of the expansion chamber in the silencer.

Certain preferred embodiments of the invention will now be described by way of example.
FIG. 1 is a right side elevational view of a motorcycle in its entirety that incorporates an exhaust device for an internal combustion engine according to a first embodiment of the present invention.
FIG. 2 is a right side elevational view of an essential portion of the motorcycle according to the first embodiment.
FIG. 3 is a rear elevational view of the essential portion of the motorcycle according to the first embodiment.
FIG. 4 is a bottom view of the essential portion of the motorcycle according to the first embodiment.
FIG. 5 is a right side elevational view of the exhaust device according to the first embodiment.
FIG. 6 is a left side elevational view of the exhaust device according to the first embodiment.
FIG. 7 is a plan view of the exhaust device according to the first embodiment.
FIG. 8 is a rear elevational view of the essential portion of the motorcycle according to the first embodiment, illustrating a modification of a silencer cover.
FIG. 9 is a right side elevational view of a motorcycle in its entirety that incorporates an exhaust device for an internal combustion engine according to a second embodiment of the present invention.
FIG. 10 is a right side elevational view of an essential portion of the motorcycle according to the second embodiment.
FIG. 11 is a left side elevational view of the essential portion of the motorcycle according to the second embodiment.
FIG. 12 is a bottom view of the essential portion of the motorcycle according to the second embodiment.
FIG. 13 is a front elevational view, partly in cross section, of the essential portion of the motorcycle according to the second embodiment.
FIG. 14 is a rear elevational view, partly in cross section, of the essential portion of the motorcycle according to the second embodiment.
FIG. 15 is a perspective view of the exhaust device according to the second embodiment.
FIG. 16 is a plan view of the exhaust device according to the second embodiment.
FIG. 17 is a right side elevational view of the exhaust device according to the second embodiment.
FIG. 18 is a left side elevational view of the exhaust device according to the second embodiment.

### [Mode for carrying out the Invention]

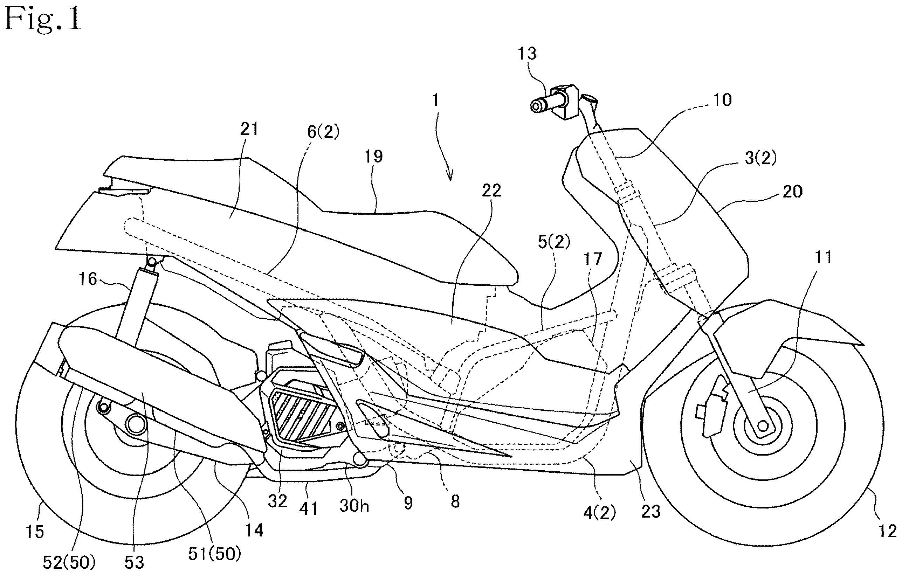

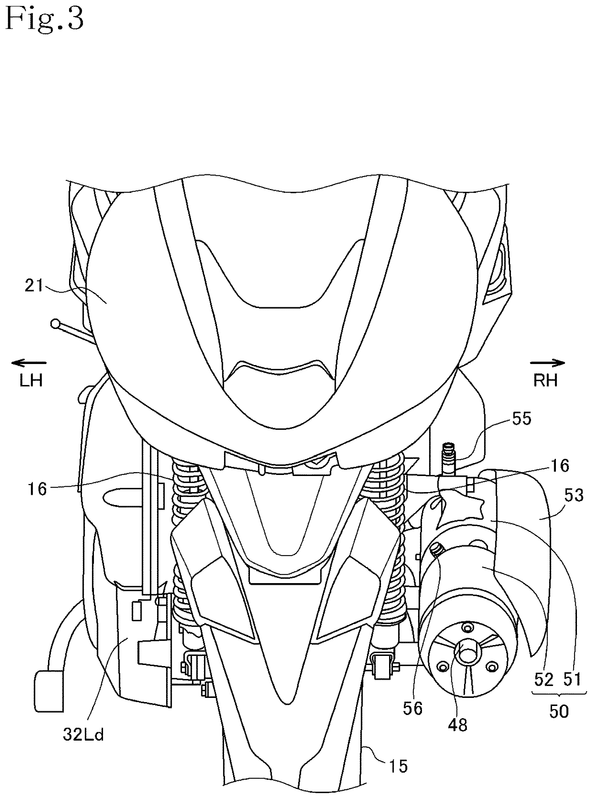

A first embodiment of the present invention will hereinafter be described below with reference to FIGS. 1 through 8.

FIG. 1 illustrates in right side elevation a motorcycle 1 in its entirety that incorporates an exhaust device for an internal combustion engine according to the first embodiment.

In the description that follows, forward, rearward, leftward, and rightward directions and other similar directional expressions will be referred to in accord with normal standards with respect to the motorcycle 1 according to the present embodiment that travels straight ahead in a forward direction. In the drawings, FR represents a forward direction, RR a rearward direction, LH a leftward direction, and RH a rightward direction.

Referring to FIG. 1, the motorcycle 1, which is illustrated as a saddle-type motorcycle, includes a vehicle body frame 2 as a vehicle body skeleton that has a head pipe 3, on a front vehicle body portion, from which there extend downwardly a pair of branched left and right main frames 4. The main frames 4 are bent rearwardly at lower end portions, then extend rearwardly, and are thereafter bent obliquely upwardly.

The main frames 4 have respective front vertical portions from which there extend rearwardly respective central frames 5 that have rear portions bent downwardly and coupled to respective rear portions of central horizontal portions of the main frames 4.

Seat rails 6 extend rearwardly and slightly obliquely upwardly from respective lower portions of downwardly bent portions of the central frames 5. The seat rails 6 have middle portions coupled to and supported by respective rear end portions of the main frames 4 that are bent and extend obliquely upwardly.

In a front portion of the vehicle body frame 2 that is generally of the above structure, a steering stem 10 is angularly movably inserted through the head pipe 3 and has a lower end integrally coupled to a front fork 11 on which a front wheel 12 is rotatably supported. Left and right handlebars 13 spreading respectively to the left and right extend upwardly from an upper end of the steering stem 10.

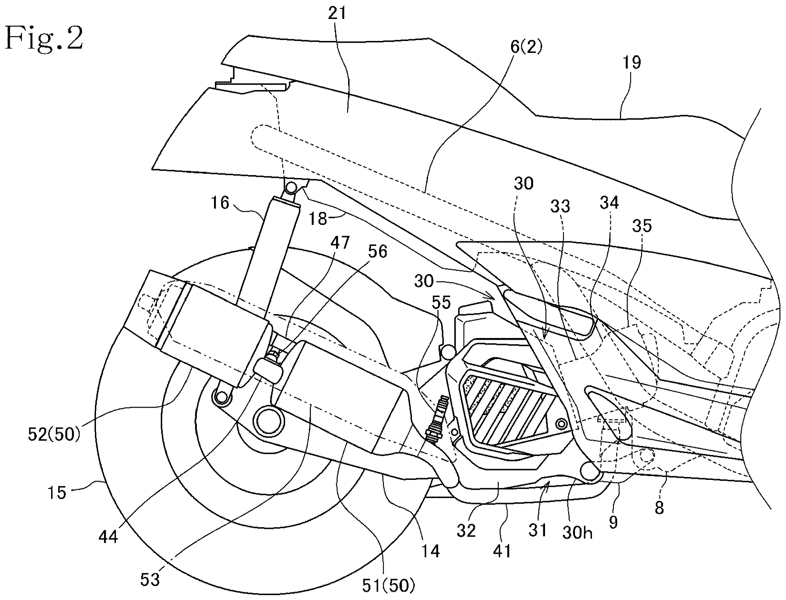

Referring to FIGS. 1 and 2, support brackets 8 protrude from respective rear bent portions of the central horizontal portions of the main frames 4. Hangers 30h protrude from a front lower portion of a swing-type power unit 30. The support brackets 8 and the hangers 30h are coupled to each other by a link 9, so that the power unit 30 is swingably supported on the vehicle body frame 2.

The power unit 30 includes a single-cylinder four-stroke water-cooled internal combustion engine 31 in its front portion. The internal combustion engine 31 includes a crankcase 32 on which a cylinder block 33, a cylinder head 34, and a cylinder head cover 35 are successively stacked so as to project forwardly. The internal combustion engine 31 is of such a posture that its cylinder axis is inclined largely forwardly nearly to horizon.

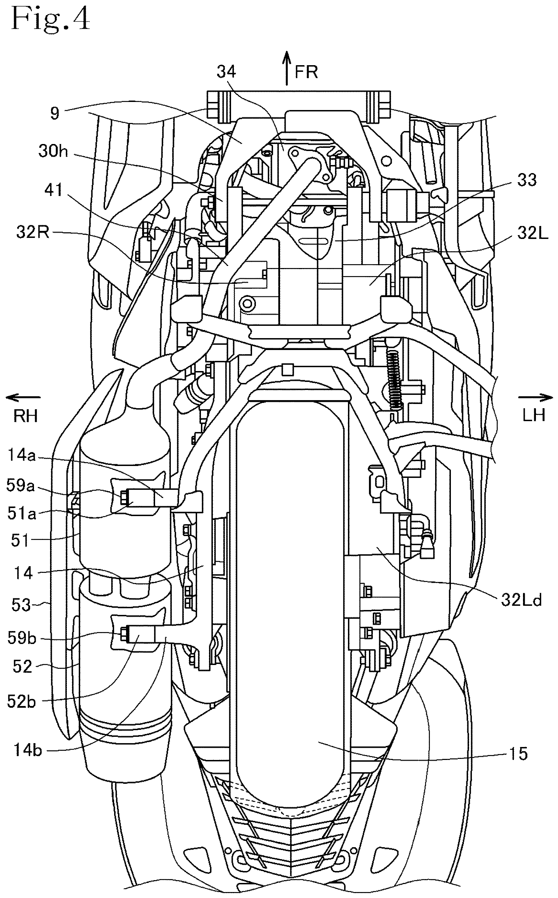

Referring to FIG. 4, the crankcase 32 is of a left-right separable structure including a right crankcase member 32R and a left crankcase member 32L that are combined with each other. The left crankcase member 32L extends rearwardly into a transmission case 32Ld housing therein a belt-type continuously variable transmission, not illustrated. A swing arm 14 extends rearwardly from the right crankcase member 32R, and a rear wheel 15 is rotatably supported on rear portions of the transmission case 32Ld and the swing arm 14.

Rear cushions 16 are interposed between rear ends of the transmission case 32Ld and the swing arm 14 and rear ends of the seat rails 6.

A fuel tank 17 is mounted on the main frames 4 and disposed in a space surrounded by the main frames 4 and the central frames 5.

A storage box 18 that is elongate in forward and rearward directions is supported on the seat rails 6. The storage box 18 is openably covered from above with a rider's seat 19.

As illustrated in FIG. 1, a vehicle body cover that covers the vehicle body is generally constructed as described below.

The head pipe 3 and the steering stem 10 on the front vehicle body portion are covered with a front cover 20. The storage box 18 has its periphery covered with a body cover 21 that extends from a central vehicle body portion to a rear vehicle body portion. The central vehicle body portion has left and right sides covered with floor side covers 22 joined to and extending downwardly from the body cover 21. Floor skirts 23 having front and rear portions that rise obliquely are joined to and extend downwardly from the floor side covers 22 in covering relation to a lower vehicle body portion.

An exhaust device 40 is configured in the following manner. Referring to FIGS. 2 and 4, an upstream exhaust pipe 41 extends downwardly from the cylinder head 34 of the internal combustion engine 31. The downwardly extending upstream exhaust pipe 41 is bent and extends rearwardly below the crankcase 32, then is bent obliquely upwardly to the right forwardly of the rear wheel 15 and connected to a muffler 50 as a silencer that is disposed on the right side of the rear wheel 15.

The muffler 50 is divided into a first muffler case 51 and a second muffler case 52 that are arrayed in series with each other in the forward and rearward directions.

The first muffler case 51 and the second muffler case 52 are of a bottomed hollow cylindrical shape each. As illustrated in FIG. 4, the first muffler case 51 and the second muffler case 52 have a bolt mount portion 51a and a bolt mount portion 52b, respectively, that are fastened by bolts 59a and 59b respectively to front and rear bolt mount bosses 14a and 14b projecting from the swing arm 14, so that the first muffler case 51 and the second muffler case 52 are supported on the swing arm 14.

The first muffler case 51 and the second muffler case 52 have respective right sides covered with a muffler cover 53.

The second muffler case 52 has an internal space acting as a first expansion chamber E1. The first muffler case 51 is internally divided in the forward and rearward directions by a separator 51s into a rear internal space acting as a second expansion chamber E2 and a front internal space acting as a third expansion chamber E3.

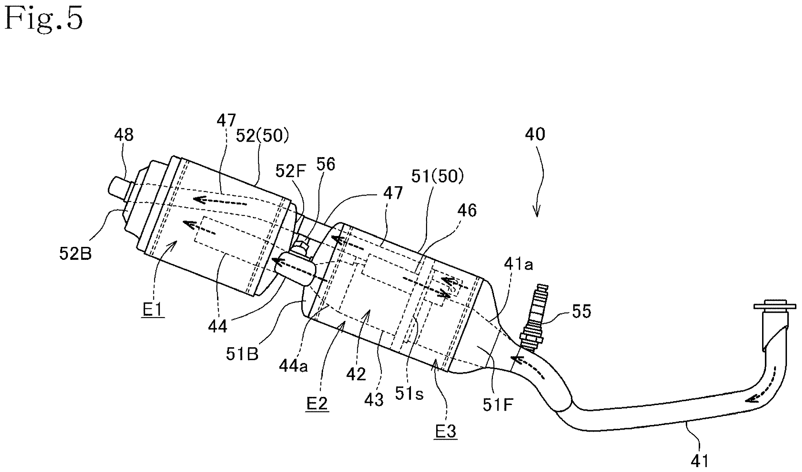

Referring to FIGS. 5 through 7, a catalytic tubular pipe 43 housing therein a catalyst 42 for purifying exhaust gases is disposed in the first muffler case 51 and extends through the separator 51s. The upstream exhaust pipe 41 extends into a front wall 51F of the first muffler case 51 and is connected through an expanding-in-diameter portion 41a to the catalytic tubular pipe 43.

A midstream joint exhaust pipe 44 extends rearwardly from a rear end of the catalytic tubular pipe 43 through a reducing-in-diameter portion 44a, and also extends through a rear wall 51B of the first muffler case 51 out of the first muffler case 51. The midstream joint exhaust pipe 44 then extends into a front wall 52F of the second muffler case 52 and has a rear end opening disposed in the first expansion chamber E1 in the second muffler case 52.

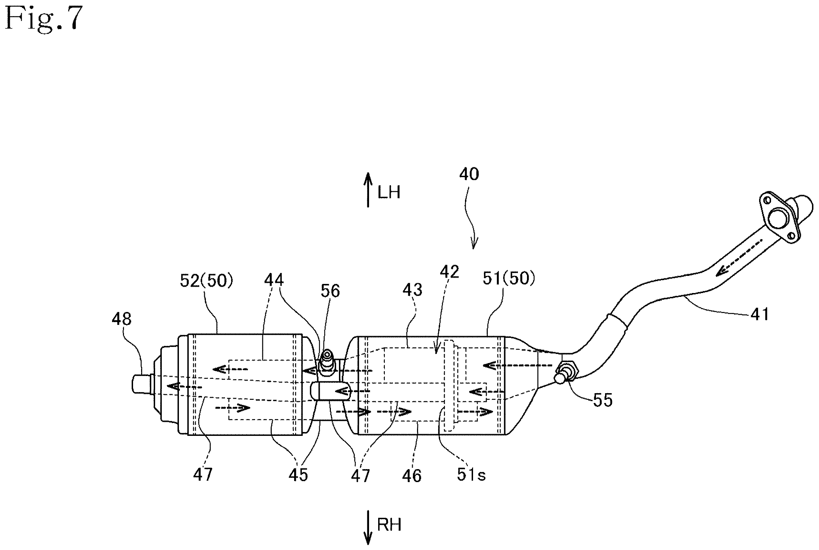

Referring to FIG. 7 that illustrates the exhaust device 40 in plan, a fluid communication pipe 45 extends parallel to and is disposed on the right side of the midstream joint exhaust pipe 44. The fluid communication pipe 45 has front and rear end portions extending respectively into the rear wall 51B of the first muffler case 51 and the front wall 52F of the second muffler case 52.

Therefore, the fluid communication pipe 45 provides fluid communication between the first expansion chamber E1 in the second muffler case 52 and the second expansion chamber E2 in the first muffler case 51.

A fluid communication pipe 46 extending through the separator 51s is disposed in the second muffler case 52.

The fluid communication pipe 46 provides fluid communication between the rear second expansion chamber E2 and the front third expansion chamber E3 in the second muffler case 52.

A downstream joint exhaust pipe 47 extends in the forward and rearward directions through the rear wall 51B of the first muffler case 51 and the front wall 52F of the second muffler case 52. The downstream joint exhaust pipe 47 has a front portion disposed in the first muffler case 51 and extending through the second expansion chamber E2 and the separator 51s and having a front end opening disposed in the third expansion chamber E3. The downstream joint exhaust pipe 47 has a rear portion disposed in the second muffler case 52 and extending through the first expansion chamber E1 toward the center of the rear wall 52B of the second muffler case 52. The rear portion of the downstream joint exhaust pipe 47 then extends through the rear wall 52B and is connected to a tail pipe 48 that is vented to the outside.

Referring to FIG. 7, the midstream joint exhaust pipe 44, the fluid communication pipe 45, and the downstream joint exhaust pipe 47 that are exposed between and connected to the first muffler case 51 and the second muffler case 52 lie parallel to each other. The midstream joint exhaust pipe 44 and the fluid communication pipe 45 are positioned respectively on left and right sides, and the downstream joint exhaust pipe 47 is disposed obliquely upwardly of and is positioned between the midstream joint exhaust pipe 44 and the fluid communication pipe 45 as viewed in plan (FIG. 7).

The exhaust device 40 is of the structure described above.

Consequently, exhaust gases discharged from an exhaust port in the cylinder head 34 into the upstream exhaust pipe 41 flow through and are purified by the catalyst 42 in the catalytic tubular pipe 43 disposed in the first muffler case 51. The exhaust gases then flow through the midstream joint exhaust pipe 44 out of the first muffler case 51, and flow into the first expansion chamber E1 in the second muffler case 52 in which the exhaust gases are expanded, releasing the exhaust pressure thereof.

The exhaust gases that have flowed into the first expansion chamber E1 then flow through the fluid communication pipe 45 into the second expansion chamber E2 in the first muffler case 51, in which the exhaust gases are expanded, further releasing the exhaust pressure thereof.

The exhaust gases that have flowed into the second expansion chamber E2 flow through the fluid communication pipe 46 into the third expansion chamber E3 in the first muffler case 51, in which the exhaust gases are expanded, yet further releasing the exhaust pressure thereof.

The exhaust gases that have flowed into the third expansion chamber E3 flow through the downstream joint exhaust pipe 47 in bypassing relation to the first expansion chamber E1 in the second muffler case 52, and are discharged through the tail pipe 48 into the outside.

In this manner, the muffler 50 of the exhaust device 40 attenuates the exhaust sound as the exhaust pressure of the exhaust gases is released in three stages by the first, second, and third expansion chambers E1, E2, and E3.

In the exhaust device 40, the catalyst 42 is disposed in the second and third expansion chambers E2 and E3 in the first muffler case 51.

Since the catalyst 42 is disposed in the second and third expansion chambers E2 and E3 in the first muffler case 51 on the upstream side, the catalyst 42 is activated early by the heat of the exhaust gases in the second and third expansion chambers E2 and E3, and is kept warm by the heat in the second and third expansion chambers E2 and E3 and hence is kept active.

Referring to FIGS. 5 through 7, a linear air-fuel ratio (LAF) sensor 55 as an upstream exhaust gas sensor is mounted on the upstream exhaust pipe 41 positioned upstream of the catalyst 42.

The LAF sensor 55 is mounted on the upstream exhaust pipe 41 in the vicinity of the first muffler case 51 near the catalyst 42 and detects an air-fuel ratio from the oxygen concentration and unburned gas concentration in the exhaust gases in the upstream exhaust pipe 41.

An O2 sensor 56 as a downstream exhaust gas sensor is mounted on a portion, which extends outside between the first muffler case 51 and the second muffler case 52, of the midstream joint exhaust pipe 44 downstream of the catalyst 42.

Since the O2 sensor 56 as the downstream exhaust gas sensor is mounted on the outwardly extending portion of the midstream joint exhaust pipe 44, the expansion chamber cases do not need to be machined to form a recess therein, and the O2 sensor 56 can simply be mounted on the exhaust pipe that is exposed outwardly.

Furthermore, it is not necessary to reduce the volume of the expansion chambers in the muffler in order to install the O2 sensor 56 thereon.

In addition, as the O2 sensor 56 is disposed so as to be concealed between the first muffler case 51, i.e., the second and third expansion chambers E2 and E3, and the second muffler case 52, i.e., the first expansion chamber E1, the O2 sensor 56 is protected from external forces as much as possible.

The O2 sensor 56 is installed on the midstream joint exhaust pipe 44 extending downstream of the catalyst 42 at a position near the catalyst and can detect the oxygen concentration in the exhaust gases immediately after the exhaust gases have been purified by the catalyst 42.

The LAF sensor 55 upstream of the catalyst 42 and the O2 sensor 56 downstream of the catalyst 42 are able to detect an air-fuel ratio accurately and also able to detect how the catalyst 42 has deteriorated.

The downstream joint exhaust pipe 47 that extends from the second and third expansion chambers E2 and E3 in the first muffler case 51 is connected to the first expansion chamber E1 in the second muffler case 52. As illustrated in FIGS. 5 and 7, the O2 sensor 56 is disposed inwardly of the downstream joint exhaust pipe 47 in a vehicular widthwise direction, i.e., leftwardly.

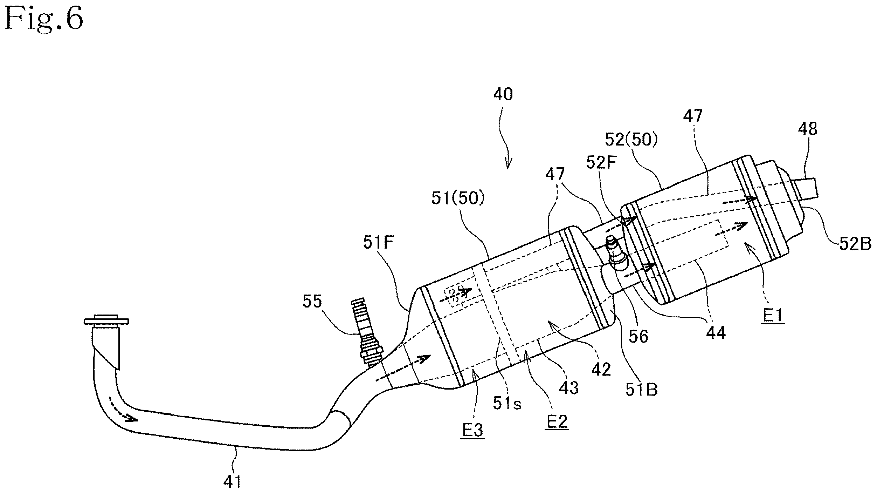

As illustrated in FIGS. 5 and 6 that are side elevational views, the O2 sensor 56 mounted on the midstream joint exhaust pipe 44 has an exposed end portion overlapping, as viewed in side elevation, an inside of the downstream joint exhaust pipe 47 in the vehicular widthwise direction, i.e., on the left side thereof.

Therefore, the O2 sensor 56 is protected by the joint exhaust pipe 47 from external forces applied sideways.

As illustrated in FIG. 7 that is a plan view, the O2 sensor 56 is inclined inwardly in the vehicular widthwise direction and protrudes obliquely upwardly from the midstream joint exhaust pipe 44. Consequently, the O2 sensor 56 can avoid being hit head-on by external forces from outside in the vehicular widthwise direction.

As illustrated in FIGS. 1, 3, and 4, the O2 sensor 56 is disposed inwardly, i.e., leftwardly, in the vehicular widthwise direction of the muffler cover 53 that covers right sides of the first muffler case 51 and the second muffler case 52. Therefore, the O2 sensor 56 is protected from external forces from an outer side by the muffler cover 53.

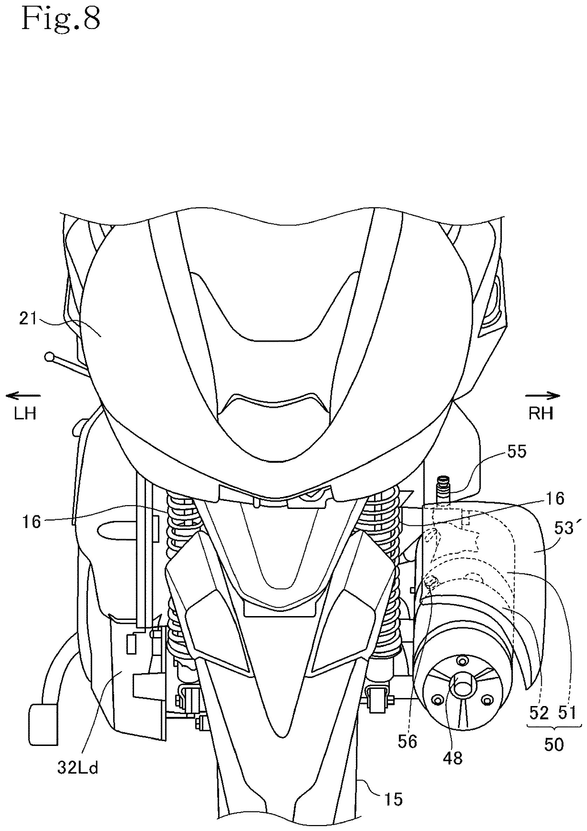

A modification of the muffler cover 53 is illustrated in FIG. 8 and will be described below.

A muffler cover 53' according to the modification covers portions of the first muffler case 51 and the second muffler case 52 ranging from their right sides to their upper sides.

As illustrated in FIG. 8, the O2 sensor 56 that is disposed between the first muffler case 51 and the second muffler case 52 has its upper side covered with the muffler cover 53'.

Therefore, the O2 sensor 56 is protected from external forces from an upper side by the muffler cover 53' .

In the exhaust device 40, the catalyst 42 is included in the first muffler case 51 that is disposed on the right side of the rear wheel 15, but is not disposed below the crankcase. Consequently, even though the front lower portion of the swing-type power unit 30 is coupled by the link 9, the catalyst 42 is kept out of physical interference with the link 9, and is hardly affected by the heat of the internal combustion engine on the type of the motorcycle where the temperature directly below the internal combustion engine is high.

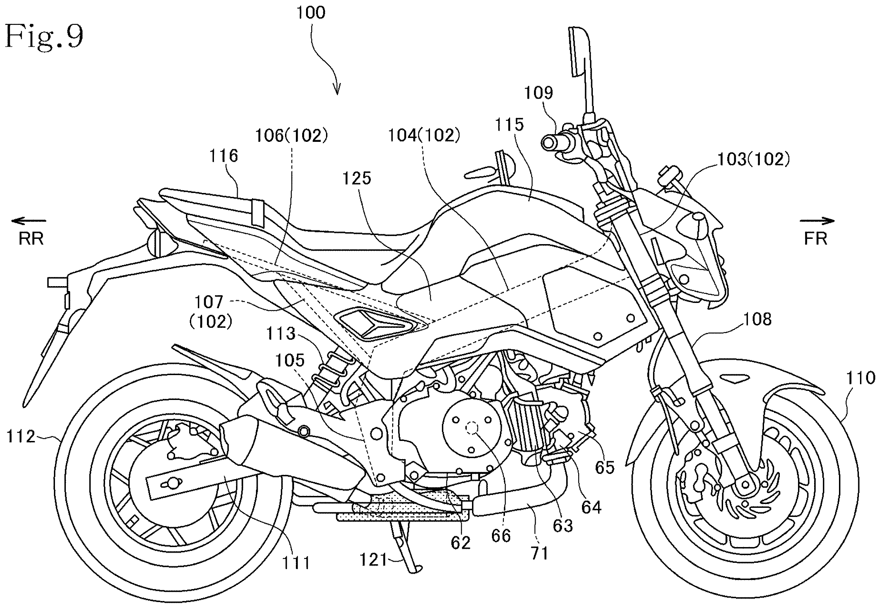

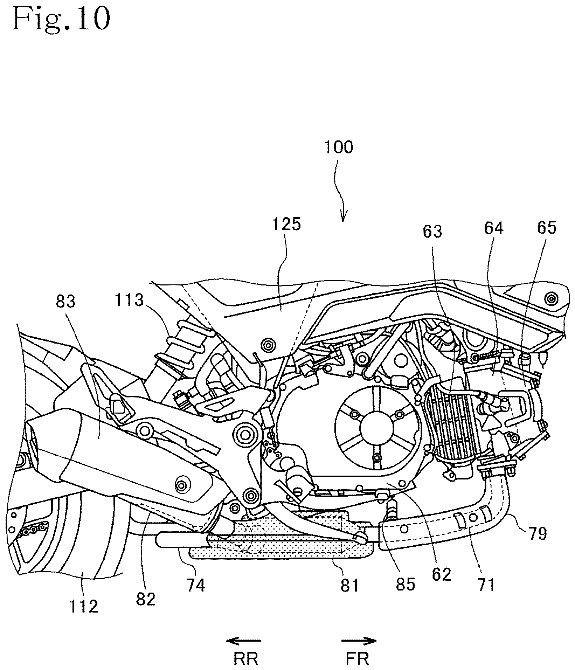

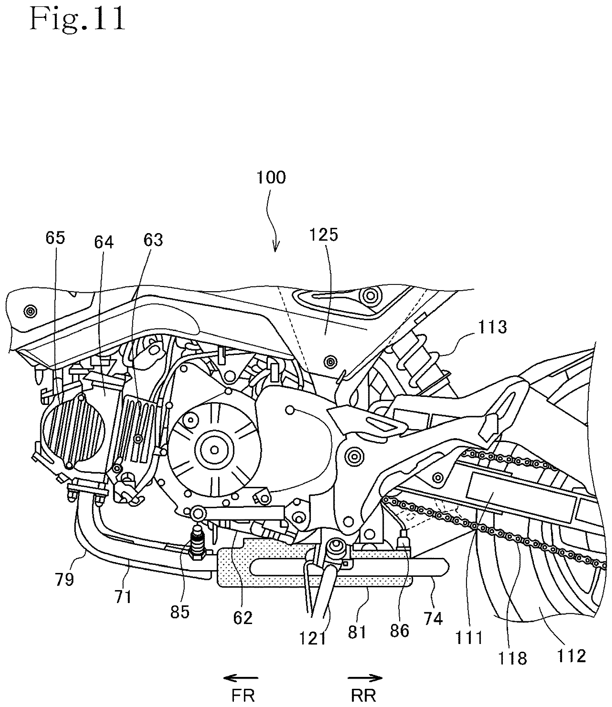

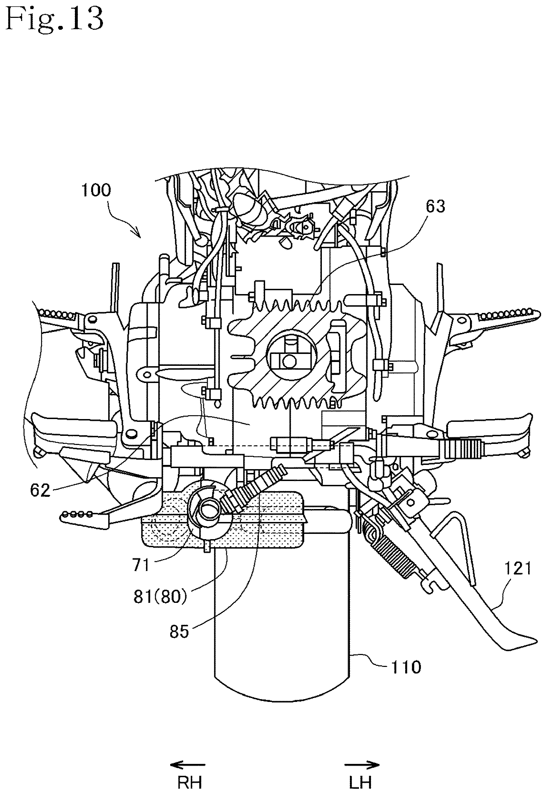

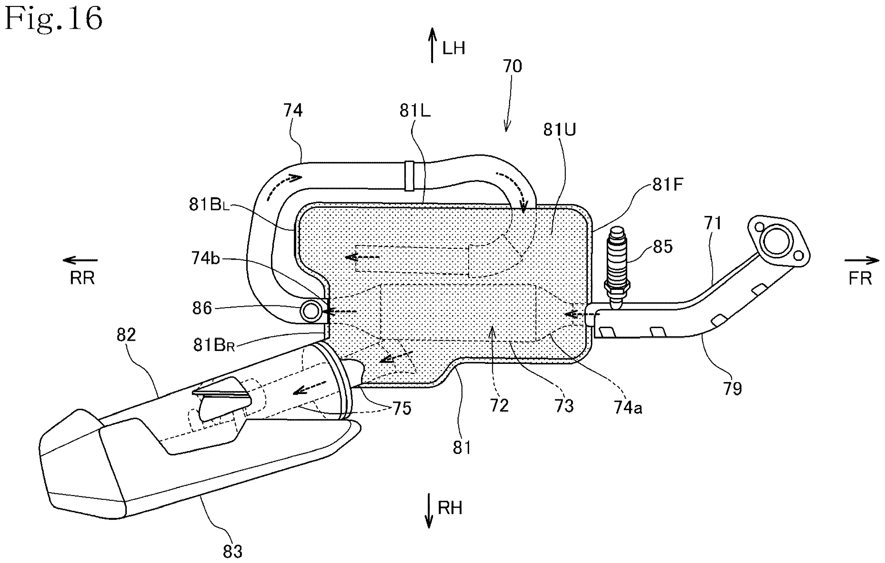

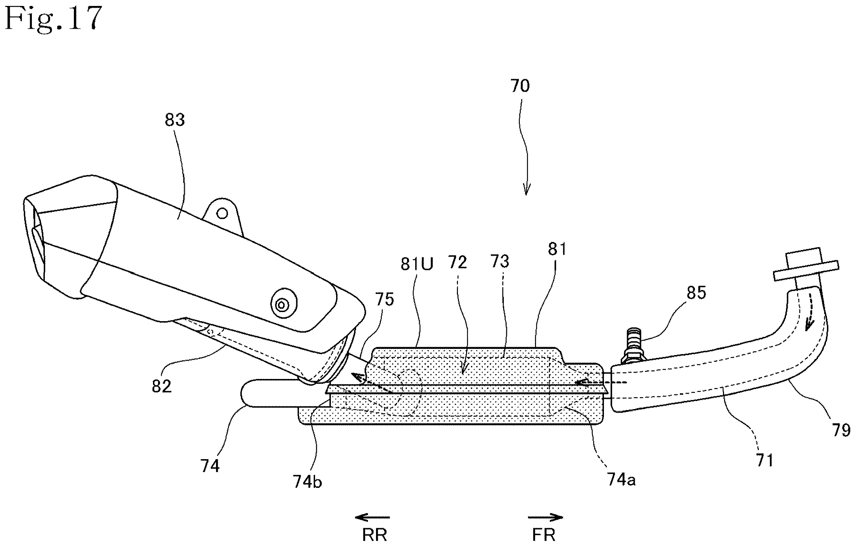

Next, a second embodiment of the present invention will be described below with reference to FIGS. 9 through 18.

FIG. 9 illustrates in right side elevation a saddle-type motorcycle 1 that incorporates an exhaust device for an internal combustion engine according to the first embodiment.

Referring to FIG. 9, a motorcycle 100 includes a vehicle body frame 102 that has a head pipe 103 to which there is fixed a main frame 104 extending obliquely rearwardly and downwardly on the central line of a vehicle body.

A pair of left and right seat rails 106 spreading respectively to the left and right extend rearwardly and upwardly from a substantially central portion of the main frame 104 in forward and rearward directions. A pair of left and right back stays 107 interconnect central portions of the seat rails 106 and a rear end portion of the main frame 104, thereby supporting the seat rails 106.

On the vehicle body frame 102, a front fork 108 is pivotally supported on the head pipe 103, and a handle 109 that extends leftwardly and rightwardly is mounted on an upper end of the front fork 108. A front wheel 110 is rotatably supported on a lower end of the front fork 108. A bottom plate 105 hangs from a lower portion of the main frame 104, and a rear fork 111 having a front end angularly movably supported on the bottom plate 105 extends rearwardly. A rear wheel 112 is rotatably supported on a rear end of the rear fork 111. A rear cushion 113 is interposed between a rear portion of the rear fork 111 and central portions of the seat rails 106.

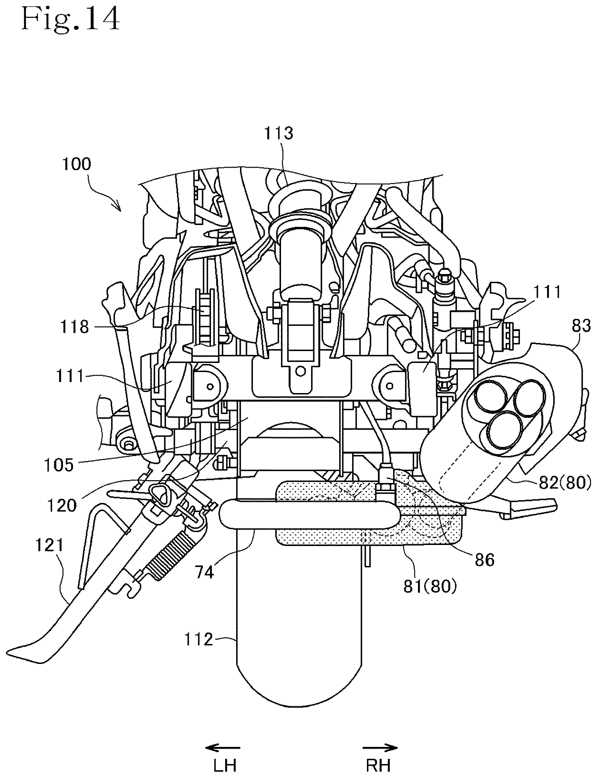

Referring to FIG. 14, a cross member 120 that is oriented in vehicular widthwise directions is supported on a lower portion of the bottom plate 105. A side stand 121 is swingably mounted on a left end portion of the cross member 120.

A fuel tank 115 is supported on the main frame 104, and a seat 116 is supported on the seat rails 106 behind the fuel tank 115.

An internal combustion engine 61 mounted on the vehicle body frame 102 is a single-cylinder four-stroke internal combustion engine. The internal combustion engine 61 is suspended from the main frame 104 such that the internal combustion engine 61 has a crankshaft 66 oriented in the vehicular widthwise directions and has its cylinder inclined forwardly nearly to horizon.

As illustrated in FIG. 9, the internal combustion engine 61 includes a cylinder block 63 and a cylinder head 64 that are successively stacked forwardly of a crankcase 62 and integrally fastened thereto.

The cylinder head 64 has a front surface covered with a head cover 65.

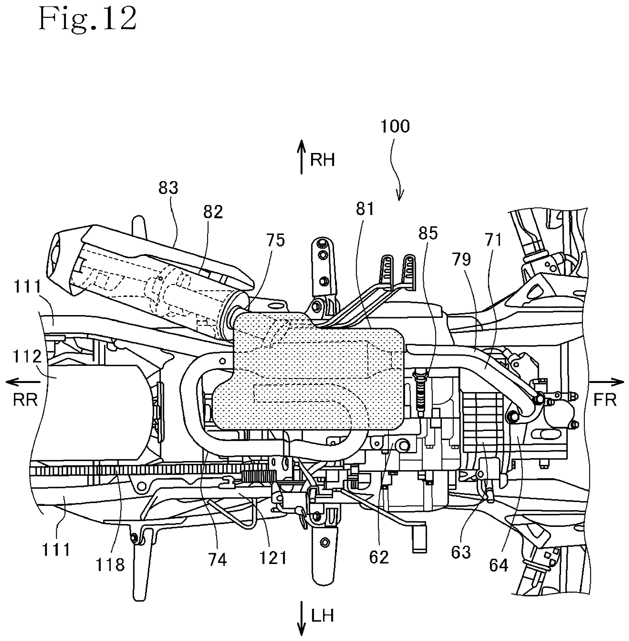

The crankshaft 66 of the internal combustion engine 61 is rotatably supported in the crankcase 62. A transmission gear mechanism is provided between a main shaft and a countershaft, both not illustrated, that are disposed behind the crankshaft 66. A chain 118 is trained around the countershaft and the axle of the rear wheel 112 for transmitting power from the crankshaft 66 to the rear wheel 112 (see FIGS. 12 and 14).

Body covers 125 cover both left and right sides of the main frame 104 and the seat rails 106.

Referring to FIGS. 9 through 12, an upstream exhaust pipe 71 extends downwardly from the cylinder head 64 of the internal combustion engine 61. The downwardly extending upstream exhaust pipe 71 is bent and extends below the crankcase 62. The upstream exhaust pipe 71 then extends rearwardly on a right side and is connected to a first muffler case 81 of a muffler 80 disposed below the crankcase 62.

The muffler 80 is divided into the first muffler case 81 below the crankcase 62 and a second muffler case 82 disposed on a right side of the rear wheel 112.

The first muffler case 81 is of a flat rectangular box shape that is elongate in forward and rearward directions. The first muffler case 81 is attached to a lower surface of the crankcase 62 and the cross member 120 from below.

The first muffler case 81 is illustrated stippled in the drawings.

The second muffler case 82 has a right side covered with a muffler cover 83.

An exhaust pipe cover 79 is attached to a right side surface of the upstream exhaust pipe 71.

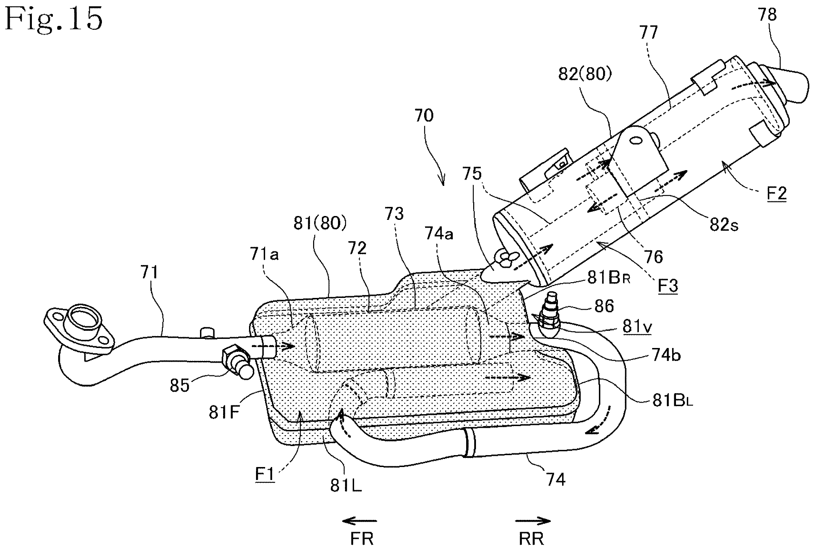

As illustrated in FIGS. 15 through 18, the first muffler case 81 has an internal space acting as a first expansion chamber F1. A catalytic tubular pipe 73 housing therein a catalyst 72 for purifying exhaust gases is disposed in the first expansion chamber F1 and extends in the forward and rearward directions. The upstream exhaust pipe 71 extends into a front wall 81F of the first muffler case 81 and is connected through an expanding-in-diameter portion 71a to the catalytic tubular pipe 73.

A midstream joint exhaust pipe 74 extends rearwardly from a rear end of the catalytic tubular pipe 73 through a reducing-in-diameter portion 74a.

Referring to FIG. 15, the first muffler case 81 has a recess 81v that is defined in a right rear corner thereof and recessed nearly to a downstream end of the catalyst 72. The midstream joint exhaust pipe 74 that extends rearwardly from the catalytic tubular pipe 73 through the reducing-in-diameter portion 74a extends through a right rear wall 81B_{R} into the recess 81v, i.e., out of the first muffler case 81.

The midstream joint exhaust pipe 74 that protrudes out of the first muffler case 81 through the right rear wall 81B_{R} extends behind a left rear wall 81B_{L} and along a left wall 81L and then extends forwardly. The midstream joint exhaust pipe 74 is then bent to the right at a front end portion of the left wall 81L and extends through the left wall 81L into the first muffler case 81. The midstream joint exhaust pipe 74 is then bent rearwardly parallel to the catalytic tubular pipe 73 and has a rear end opening disposed in the first expansion chamber F1 in the first muffler case 81.

Stated otherwise, the midstream joint exhaust pipe 74 that extends out of the first expansion chamber F1 in the first muffler case 81 extends along an outer side of the first muffler case 81 and is connected to the first expansion chamber F1.

The second muffler case 82 is of a bottomed hollow cylindrical shape and is disposed on a right side of the rear wheel 112 at a posture inclined rearwardly and upwardly.

The second muffler case 82 is internally divided in the forward and rearward directions by a separator 82s into a rear internal space acting as a second expansion chamber F2 and a front internal space acting as a third expansion chamber F3.

Referring to FIG. 15, a downstream joint exhaust pipe 75 extends through a front wall 82F of the second muffler case 82 and extends obliquely forwardly and downwardly from the front wall 82F. The downstream joint exhaust pipe 75 then extends obliquely into a right rear portion of an upper wall 81U of the first muffler case 81, thereby interconnecting the first muffler case 81 and the second muffler case 82.

The downstream joint exhaust pipe 75 has a rear portion extending into the second muffler case 82 and then extending rearwardly in the third expansion chamber F3 and through the separator 82s, and having a rear end opening disposed in the second expansion chamber F2.

In the second muffler case 82, a fluid communication pipe 76 lies parallel to the downstream joint exhaust pipe 75 and extends through the separator 82s. The fluid communication pipe 76 provides fluid communication between the second expansion chamber F2 and the third expansion chamber F3.

Further, a downstream exhaust pipe 77 extends through the separator 82s in the second muffler case 82 and has a front end opening disposed in the third expansion chamber F3. The downstream exhaust pipe 77 extends rearwardly through the second expansion chamber F2 to the center of a rear wall 82B of the second muffler case 82. The downstream exhaust pipe 77 then extends through the rear wall 82B and is connected to a tail pipe 78 that is vented to the outside.

An exhaust device 70 is of the structure described above.

Consequently, exhaust gases discharged from an exhaust port in the cylinder head 64 into the upstream exhaust pipe 71 flow through and are purified by the catalyst 72 in the catalytic tubular pipe 73 disposed in the first muffler case 81. The exhaust gases then flow through the midstream joint exhaust pipe 74 out of the first muffler case 81, and flow into the first expansion chamber F1 in the first muffler case 81 in which the exhaust gases are expanded, releasing the exhaust pressure thereof.

The exhaust gases that have flowed into the first expansion chamber F1 flow through the downstream joint exhaust pipe 75 in bypassing relation to the third expansion chamber F3 in the second muffler case 82 into the second expansion chamber F2 in which the exhaust gases are expanded, releasing the exhaust pressure thereof.

The exhaust gases that have flowed into the second expansion chamber F2 flow through the fluid communication pipe 76 into the third expansion chamber F3 in which the exhaust gases are expanded, yet further releasing the exhaust pressure thereof.

The exhaust gases that have flowed into the third expansion chamber F3 flow through the downstream exhaust pipe 77 in bypassing relation to the second expansion chamber F2, and are discharged through the tail pipe 48 into the outside.

In this manner, the muffler 80 of the exhaust device 70 attenuates the exhaust sound as the exhaust pressure of the exhaust gases is released in three stages by the first, second, and third expansion chambers F1, F2, and F3.

In the exhaust device 70, the catalyst 72 is disposed in the first expansion chamber F1 in the first muffler case 81.

Since the catalyst 72 is disposed in the first expansion chamber F1 in the first muffler case 51 on the upstream side, the catalyst 72 can be activated early by the heat of the exhaust gases in the first expansion chamber F1, and is kept warm by the heat in the first expansion chamber F1 and hence is kept active.

Referring to FIGS. 15 through 18, an LAF sensor 85 as an upstream exhaust gas sensor is mounted on the upstream exhaust pipe 71 positioned upstream of the catalyst 72.

The LAF sensor 85 is mounted on the upstream exhaust pipe 71 in the vicinity of the first muffler case 81 near the catalyst 72 and detects an air-fuel ratio from the oxygen concentration and unburned gas concentration in the exhaust gases in the upstream exhaust pipe 71.

The midstream joint exhaust pipe 74 positioned downstream of the catalyst 72 extends out of the first expansion chamber F1 in the first muffler case 81 and then extends along a periphery of the first muffler case 81 and is connected to the first expansion chamber F1. An O2 sensor 86 as a downstream exhaust gas sensor is mounted on a portion of the midstream joint exhaust pipe 74 that extends out of the first expansion chamber F1.

Therefore, the O2 sensor 86 can easily be mounted on the portion, exposed outside, of the midstream joint exhaust pipe 74 without machining the first muffler case 81 to form a recess therein.

There is no need to reduce the volume of expansion chambers.

Referring to FIG. 15, the O2 sensor 86 is disposed in the vicinity of an upstream joint 74b of the midstream joint exhaust pipe 74 that is joined to the first muffler case 81, i.e., the first expansion chamber F1.

The O2 sensor 86 is thus mounted on the portion of the midstream joint exhaust pipe 74 that protrudes from the right rear wall 81B_{R} of the first muffler case 81 into the recess 81v.

Since the O2 sensor 86 is positioned in the recess 81v near the right rear wall 81B_{R} of the first muffler case 81, the O2 sensor 86 can be disposed as closely to the catalyst 72 as possible and can accurately detect a change caused in the oxygen concentration in the exhaust gases by the catalyst 72.

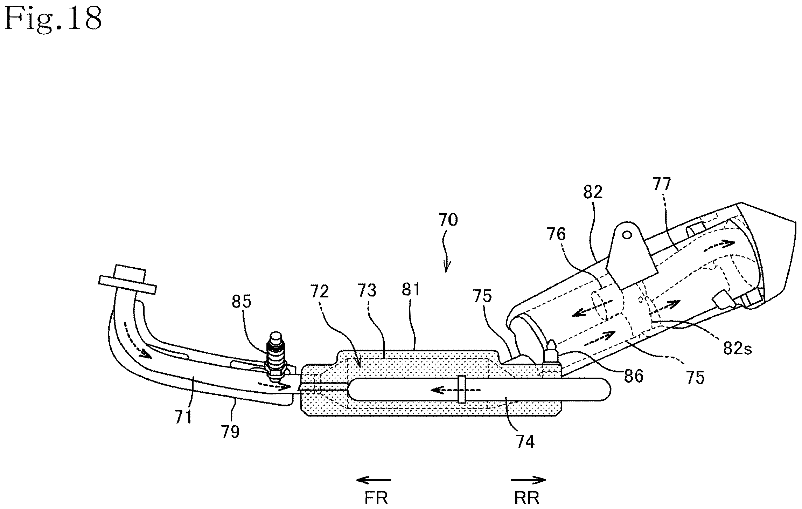

As illustrated in FIG. 18 that is a left side elevational view, as the O2 sensor 86 is disposed inwardly, i.e., rightwardly, in the vehicular widthwise directions of the second muffler case 82, i.e., the second and third expansion chambers F2 and F3, the O2 sensor 86 is protected by the second muffler case 82.

Although the exhaust devices for an internal combustion engine according to the first and second embodiments of the present invention have been described above, the present invention is not limited to the above embodiments, but can be reduced to practice in various ways within the scope of the present invention as defined by the claims.

For example, the vehicle according to the present invention is not limited to the saddle-type motorcycle 1 according to the above embodiments, but may be any of various saddle-type vehicles including scooter-type vehicles, three- or four-wheeled buggies, etc. insofar as they fulfil the requirements of claims 1 or 7.

### [Reference Signs List]

E1···First expansion chamber, E2···Second expansion chamber, E3···Third expansion chamber,
1···Motorcycle, 2···Vehicle body frame, 3··· Head pipe, 4···Main frame, 5···Central frame, 6···Seat rail,
10···Steering stem, 11···Front fork, 12···Front wheel, 13···Handlebar, 14···Swing arm, 15···Rear wheel, 16···Rear cushion, 18···Storage box, 19···Rider's seat,
20···Front cover, 21···Body cover, 22···Floor side cover, 23···Floor skirt,
30···Power unit, 31···Internal combustion engine, 32···Crankcase, 33···Cylinder block, 34···Cylinder head, 35···Cylinder head cover,
40···Exhaust device, 41···Upstream exhaust pipe, 42···Catalyst, 43···Catalytic tubular pipe, 44···Midstream joint exhaust pipe, 45···Fluid communication pipe, 46···Fluid communication pipe, 47···Downstream joint exhaust pipe, 48···Tail pipe, 49···,
50···Muffler, 51···First muffler case, 51s···Separator, 52···Second muffler case, 53···Muffler cover, 53'···Muffler cover, 55···LAF sensor, 56···O2 sensor, 59a, 59b···Bolt,
E1···First expansion chamber, E2···Second expansion chamber, E3···Third expansion chamber,
61···Internal combustion engine, 62···Crankcase, 63···Cylinder block, 64···Cylinder head, 65···Head cover, 66···Crankshaft,
70···, 71···Upstream exhaust pipe, 72···Catalyst, 73···Catalytic tubular pipe, 74···Midstream joint exhaust pipe, 74b···Upstream joint, 75···Downstream joint exhaust pipe, 76···Fluid communication pipe, 77···Downstream exhaust pipe, 78···Tail pipe, 79···Exhaust pipe cover,
80···Muffler, 81···First muffler case, 82···Second muffler case, 82s···Separator, 83···Muffler cover, 84···, 85···LAF sensor, 86···O2 sensor,
F1···First expansion chamber, F2···Second expansion chamber, F3···Third expansion chamber,
100···Motorcycle, 101···, 102···Vehicle body frame, 103···Head pipe, 104···Main frame, 105···Bottom plate, 106···Seat rail, 107···Back stay, 108···Front fork, 109···Handle, 110···Front wheel, 111···Rear fork, 112··· Rear wheel, 113···Rear cushion, 114···, 115···Fuel tank, 116···Seat, 118···Chain, 120···Cross member, 121···Side stand, 125···Body cover

## Claims

1. An exhaust device for an internal combustion engine for being mounted on a vehicle, in which a catalyst (42) and a silencer (50) are disposed in an exhaust pipe configured to extend from the internal combustion engine, comprising:
an upstream exhaust gas sensor (55) disposed upstream of the catalyst (42); and
a downstream exhaust gas sensor (56) disposed downstream of the catalyst (42),
**characterized in that**:
the silencer is a muffler that is divided into a first muffler case (51) and a second muffler case (52);
the second muffler case (52) has a first expansion chamber (E1) and the first muffler case (51) is internally divided by a separator (51s) into a second expansion chamber (E2) and a third expansion chamber (E3) ;
the catalyst (42) is disposed in the first muffler case (51) and extends through the separator (51s);
the downstream exhaust gas sensor (56) is mounted on a midstream joint exhaust pipe (44) that extends from the catalyst, out of the first muffler case (51) and into the first expansion chamber (E1) in the second muffler case (52).

2. A vehicle comprising:
an internal combustion engine mounted on the vehicle; and
an exhaust device of claim 1.

3. The vehicle as claimed in claim 2, the exhaust device further comprising:
another joint exhaust pipe (47) than the midstream joint exhaust pipe (44), interconnecting the second and third expansion chambers (E2, E3) and the first expansion chamber (E1) that are separate from each other,
wherein the downstream exhaust gas sensor (56) has at least a portion overlapping the other joint exhaust pipe (47) as viewed in side elevation of the vehicle and located inwardly of the other joint exhaust pipe (47) with respect to the vehicle.

4. The vehicle as claimed in either of claims 2 or 3, wherein the downstream exhaust gas sensor (56) is mounted on the midstream joint exhaust pipe (44) and inclined obliquely inwardly in a vehicular widthwise direction.

5. The vehicle as claimed in any one of claims 2 through 4, wherein the downstream exhaust gas sensor (56) is disposed inside in a vehicular widthwise direction of a muffler cover (53) that covers an outside in the vehicular widthwise direction of the silencer (50).

6. The vehicle as claimed in claim 5, wherein the downstream exhaust gas sensor (56) has an upper side covered with the muffler cover (53).

7. An exhaust device for an internal combustion engine for being mounted on a vehicle, in which a catalyst (72) and a silencer (80) are disposed in an exhaust pipe configured to extend from the internal combustion engine, comprising:
an upstream exhaust gas sensor (85) disposed upstream of the catalyst (72); and
a downstream exhaust gas sensor (86) disposed downstream of the catalyst (72),
**characterized in that**:
the silencer is a muffler that is divided into a first muffler case (81) and a second muffler case (82);
the first muffler case (81) has a first expansion chamber (F1) and the second muffler case is internally divided by a separator (82s) into a second expansion chamber (F2) and a third expansion chamber (F3);
the catalyst (72) is disposed in the first muffler case (81);
the downstream exhaust gas sensor (86) is mounted on a midstream joint exhaust pipe (74) that extends from the catalyst, out of the first muffler case (81) and into the first expansion chamber (F1) in the first muffler case (81).

8. The exhaust device for an internal combustion engine as claimed in claim 7, wherein the downstream exhaust gas sensor (86) is disposed in the vicinity of an upstream joint (74b) of the midstream joint exhaust pipe (74), which extends outwardly from the first expansion chamber (F1), that is joined to the first expansion chamber (F1).

9. The exhaust device for an internal combustion engine as claimed in claim 8, wherein the first expansion chamber (F1) has a recess (81v) that is recessed near to a downstream end of the catalyst (72),
the midstream joint exhaust pipe (74) extends from the first expansion chamber (F1) into the recess (81v), and
the downstream exhaust gas sensor (86) has a portion mounted on the midstream joint exhaust pipe (74) and positioned in the recess (81v).

10. A vehicle comprising:
an internal combustion engine mounted on the vehicle; and
an exhaust device according to any of claims 7 to 9.

11. The vehicle of claim 10, wherein the first expansion chamber (F1) is disposed below the internal combustion engine (61),
the second expansion chamber (F2) is connected to the first expansion chamber (F1) by a downstream joint exhaust pipe (75),
the downstream exhaust gas sensor (86) is disposed inwardly in a vehicular widthwise direction of the second expansion chamber ( F2) or the downstream joint exhaust pipe (75).

## Patentansprüche

1. Abgasvorrichtung für einen Verbrennungsmotor, um am Motor in einem Fahrzeug montiert zu werden, in welchem ein Katalysator (42) und ein Schalldämpfer (50) in einem Auspuffrohr angebracht sind, welches konfiguriert ist, sich von dem Verbrennungsmotor aus zu erstrecken, umfassend:
einen vorgelagerten Auspuffgassensor (55), welcher dem Katalysator (42) vorgelagert angebracht ist; und
einen nachgelagerten Auspuffgassensor (56), welcher dem Katalysator (42) nachgelagert angebracht ist, **dadurch gekennzeichnet, dass**:
der Schalldämpfer ein Auspufftopf ist, welcher in ein erstes Auspufftopfgehäuse (51) und ein zweites Auspufftopfgehäuse (52) unterteilt ist;
das zweite Auspufftopfgehäuse (52) eine erste Expansionskammer (E1) aufweist und das erste Auspufftopfgehäuse (51) durch einen Separator (51s) in eine zweite Expansionskammer (E2) und eine dritte Expansionskammer (E3) unterteilt ist;
der Katalysator (42) in dem ersten Auspufftopfgehäuse (51) angebracht ist und sich durch den Separator (51s) erstreckt;
der nachgelagerte Auspuffgassensor (56) auf einem mittig gelagerten gemeinsamen Auspuffrohr (44) montiert ist, welches sich von dem Katalysator, aus dem ersten Auspufftopfgehäuse (51) heraus und in die erste Expansionskammer (E1) hinein in dem zweiten Auspufftopfgehäuse (52) erstreckt.

2. Fahrzeug, umfassend:
einen Verbrennungsmotor, welcher auf dem Fahrzeug montiert ist; und
eine Abgasvorrichtung nach Anspruch 1.

3. Fahrzeug nach Anspruch 2, wobei die Abgasvorrichtung weiter umfasst:
ein anderes gemeinsames Auspuffrohr (47) als das mittig gelagerte gemeinsame Auspuffrohr (44), welches die zweite und dritte Expansionskammer (E2, E3) und die erste Expansionskammer (E1) miteinander verbindet, welche voneinander getrennt sind,
wobei der nachgelagerte Auspuffgassensor (56) zumindest einen Abschnitt aufweist, welcher mit dem anderen gemeinsamen Auspuffrohr (47) überlappt, wenn in Seitenansicht des Fahrzeugs betrachtet, und sich in Bezug auf das Fahrzeug einwärts des anderen gemeinsamen Auspuffrohr (47) befindet.

4. Fahrzeug nach einem der Ansprüche 2 oder 3, wobei der nachgelagerte Auspuffgassensor (56) auf dem mittig gelagerten gemeinsamen Auspuffrohr (44) montiert und in einer Fahrzeugbreitenrichtung schräg einwärts geneigt ist.

5. Fahrzeug nach einem der Ansprüche 2 bis 4, wobei der nachgelagerte Auspuffgassensor (56) innerhalb einer Fahrzeugbreitenrichtung in einer Auspufftopfabdeckung (53) angebracht ist, welche eine Außenseite in der Fahrzeugbreitenrichtung des Schalldämpfers (50) bedeckt.

6. Fahrzeug nach Anspruch 5, wobei der nachgelagerte Auspuffgassensor (56) eine Oberseite aufweist, welche mit der Auspufftopfabdeckung (53) bedeckt ist.

7. Abgasvorrichtung für einen Verbrennungsmotor, um am Motor in einem Fahrzeug montiert zu werden, in welchem ein Katalysator (72) und ein Schalldämpfer (80) in einem Auspuffrohr angebracht sind, welches konfiguriert ist, sich von dem Verbrennungsmotor aus zu erstrecken, umfassend:
einen vorgelagerten Auspuffgassensor (85), welcher dem Katalysator (72) vorgelagert angebracht ist; und
einen nachgelagerten Auspuffgassensor (86), welcher dem Katalysator (72) nachgelagert angebracht ist,
**dadurch gekennzeichnet, dass**:
der Schalldämpfer ein Auspufftopf ist, welcher in ein erstes Auspufftopfgehäuse (81) und ein zweites Auspufftopfgehäuse (82) unterteilt ist;
das erste Auspufftopfgehäuse (81) eine erste Expansionskammer (F1) aufweist und das zweite Auspufftopfgehäuse durch einen Separator (82s) in eine zweite Expansionskammer (F2) und eine dritte Expansionskammer (F3) unterteilt ist;
der Katalysator (72) in dem ersten Auspufftopfgehäuse (81) angebracht ist;
der nachgelagerte Auspuffgassensor (86) auf einem mittig gelagerten gemeinsamen Auspuffrohr (74) montiert ist, welches sich von dem Katalysator, aus dem ersten Auspufftopfgehäuse (81) heraus und in die erste Expansionskammer (F1) hinein in dem ersten Auspufftopfgehäuse (81) erstreckt.

8. Abgasvorrichtung für einen Verbrennungsmotor nach Anspruch 7, wobei der nachgelagerte Auspuffgassensor (86) in der Umgebung einer vorgelagerten Verbindung (74b) des mittig gelagerten gemeinsamen Auspuffrohrs (74) angebracht ist, welches sich von der ersten Expansionskammer (F1) auswärts erstreckt, welche mit der ersten Expansionskammer (F1) verbunden ist.

9. Abgasvorrichtung für einen Verbrennungsmotor nach Anspruch 8, wobei die erste Expansionskammer (F1) eine Aussparung (81v) aufweist, welche nahe einem nachgelagerten Ende des Katalysators (72) ausgespart ist,
das mittig gelagerte gemeinsame Auspuffrohr (74) sich von der ersten Expansionskammer (F1) in die Aussparung (81v) erstreckt, und
wobei der nachgelagerte Auspuffgassensor (86) einen Abschnitt aufweist, welcher auf dem mittig gelagerten gemeinsamen Auspuffrohr (74) montiert und in der Aussparung (81v) positioniert ist.

10. Fahrzeug, umfassend:
einen Verbrennungsmotor, welcher auf dem Fahrzeug montiert ist; und
eine Abgasvorrichtung nach einem der Ansprüche 7 bis 9.

11. Fahrzeug nach Anspruch 10, wobei die erste Expansionskammer (F1) unter dem Verbrennungsmotor (61) angebracht ist,
die zweite Expansionskammer (F2) mit der ersten Expansionskammer (F1) durch ein nachgelagertes gemeinsames Auspuffrohr (75) verbunden ist,
der nachgelagerte Auspuffgassensor (86) einwärts in einer Fahrzeugbreitenrichtung der zweiten Expansionskammer (F2) oder des nachgelagerten gemeinsamen Auspuffrohr (75) angebracht ist.

## Revendications

1. Dispositif d'échappement pour un moteur à combustion interne destiné à être monté sur un véhicule, dans lequel un catalyseur (42) et un silencieux (50) sont disposés dans un tuyau d'échappement conçu pour s'étendre à partir du moteur à combustion interne, comprenant :
un capteur de gaz d'échappement amont (55) disposé en amont du catalyseur (42) ; et
un capteur de gaz d'échappement aval (56) disposé en aval du catalyseur (42),
**caractérisé en ce que** :
le silencieux est un pot d'échappement qui est divisé en un premier corps de pot d'échappement (51) et un second corps de pot d'échappement (52) ;
le second corps de pot d'échappement (52) présente une première chambre d'expansion (E1) et le premier corps de pot d'échappement (51) est divisé de manière interne par un séparateur (51s) en une deuxième chambre d'expansion (E2) et une troisième chambre d'expansion (E3) ;
le catalyseur (42) est disposé dans le premier corps de pot d'échappement (51) et s'étend à travers le séparateur (51s) ;
le capteur de gaz d'échappement aval (56) est monté dans un raccord de tuyau d'échappement intermédiaire (44) qui s'étend à partir du catalyseur, hors du premier corps de pot d'échappement (51) et dans la première chambre d'expansion (E1) dans le second corps de pot d'échappement (52).

2. Véhicule comprenant :
un moteur à combustion interne monté sur le véhicule ; et
un dispositif d'échappement selon la revendication 1.

3. Véhicule selon la revendication 2, le dispositif d'échappement comprenant en outre :
un autre raccord de tuyau d'échappement (47) que le raccord de tuyau d'échappement intermédiaire (44), reliant les deuxième et troisième chambres d'expansion (E2, E3) et la première chambre d'expansion (E1) qui sont séparées les unes des autres,
dans lequel le capteur de gaz d'échappement aval (56) présente au moins une partie chevauchant l'autre raccord de tuyau d'échappement (47) sur une vue de côté du véhicule et située vers l'intérieur de l'autre raccord de tuyau d'échappement (47) par rapport au véhicule.

4. Véhicule selon l'une ou l'autre des revendications 2 ou 3, dans lequel le capteur de gaz d'échappement aval (56) est monté sur le raccord de tuyau d'échappement intermédiaire (44) et incliné de façon oblique vers l'intérieur dans une direction de la largeur du véhicule.

5. Véhicule selon l'une quelconque des revendications 2 à 4, dans lequel le capteur de gaz d'échappement aval (56) est disposé à l'intérieur dans une direction de la largeur du véhicule d'un carter de pot d'échappement (53) qui recouvre un extérieur dans la direction de la largeur du véhicule du silencieux (50).

6. Véhicule selon la revendication 5, dans lequel le capteur de gaz d'échappement aval (56) présente un côté supérieur recouvert par le carter de pot d'échappement (53).

7. Dispositif d'échappement pour un moteur à combustion interne destiné à être monté sur un véhicule, dans lequel un catalyseur (72) et un silencieux (80) sont disposés dans un tuyau d'échappement conçu pour s'étendre à partir du moteur à combustion interne, comprenant :
un capteur de gaz d'échappement amont (85) disposé en amont du catalyseur (72) ; et
un capteur de gaz d'échappement aval (86) disposé en aval du catalyseur (72),
**caractérisé en ce que** :
le silencieux est un pot d'échappement qui est divisé en un premier corps de pot d'échappement (81) et un second corps de pot d'échappement (82) ;
le premier corps de pot d'échappement (81) présente une première chambre d'expansion (F1) et le second corps de pot d'échappement est divisé de manière interne par un séparateur (82s) en une deuxième chambre d'expansion (F2) et une troisième chambre d'expansion (F3) ;
le catalyseur (72) est disposé dans le premier corps de pot d'échappement (81) ;
le capteur de gaz d'échappement aval (86) est monté sur un raccord de tuyau d'échappement intermédiaire (74) qui s'étend à partir du catalyseur, hors du premier corps de pot d'échappement (81) et dans la première chambre d'expansion (F1) dans le premier corps de pot d'échappement (81).

8. Dispositif d'échappement pour un moteur à combustion interne selon la revendication 7, dans lequel le capteur de gaz d'échappement aval (86) est disposé à proximité d'un raccord amont (74b) du raccord de tuyau d'échappement intermédiaire (74), qui s'étend vers l'extérieur à partir de la première chambre d'expansion (F1), qui est raccordé à la première chambre d'expansion (F1).

9. Dispositif d'échappement pour un moteur à combustion interne selon la revendication 8, dans lequel la première chambre d'expansion (F1) présente un évidement (81v) qui est évidé à proximité d'une extrémité aval du catalyseur (72),
le raccord de tuyau d'échappement intermédiaire (74) s'étend à partir de la première chambre d'expansion (F1) dans l'évidement (81v), et
le capteur de gaz d'échappement aval (86) présente une partie montée sur le raccord de tuyau d'échappement intermédiaire (74) et positionnée dans l'évidement (81v).

10. Véhicule comprenant :
un moteur à combustion interne monté sur le véhicule ; et
un dispositif d'échappement selon l'une quelconque des revendications 7 à 9.

11. Véhicule selon la revendication 10, dans lequel la première chambre d'expansion (F1) est disposée au-dessous du moteur à combustion interne (61),
la deuxième chambre d'expansion (F2) est reliée à la première chambre d'expansion (F1) par un raccord de tuyau d'échappement aval (75),
le capteur de gaz d'échappement aval (86) est disposé vers l'intérieur dans une direction de la largeur du véhicule de la deuxième chambre d'expansion (F2) ou du raccord de tuyau d'échappement aval (75).
